(19) Europäisches Patentamt
European Patent Office
Office européen des brevets

(11) Veröffentlichungsnummer: **0 072 047**
**A1**

(12) **EUROPÄISCHE PATENTANMELDUNG**

(21) Anmeldenummer: **82200843.9**

(22) Anmeldetag: **06.07.82**

(51) Int. Cl.³: **A 01 N 33/22**, A 01 N 37/48, A 01 N 43/70, A 01 N 47/30 // (A01N33/22, 33/18),(A01N37/48, 33/18),(A01N43/70, 33/18), (A01N47/30, 33/18)

(30) Priorität: **25.07.81 DE 3129374**

(43) Veröffentlichungstag der Anmeldung: **16.02.83 Patentblatt 83/7**

(84) Benannte Vertragsstaaten: **AT BE CH DE FR GB IT LI LU NL SE**

(71) Anmelder: **NORDDEUTSCHE AFFINERIE AG, Alsterterrasse 2, D-2000 Hamburg 36 (DE)**

(72) Erfinder: **Ploss, Hartmut, Dr., Sierichstrasse 88, D-2000 Hamburg 60 (DE)**
Erfinder: **Marzusch, Karl, Dr., Rehwinkel 3, D-2070 Grosshansdorf (DE)**
Erfinder: **Maierhofer, Franz, Dipl.-Landwirt, Sebastian-Kneipp-Strasse 14, D-2210 Itzehoe (DE)**

(74) Vertreter: **Fischer, Ernst, Dr., Reuterweg 14, D-6000 Frankfurt am Main 1 (DE)**

(54) **Mittel zur selektiven Unkrautbekämpfung und seine Anwendung.**

(57) Ein Mittel zur selektiven Unkrautbekämpfung, insbesondere im Getreideanbau, enthaltend eine Dinitroanilinverbindung der Formel

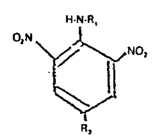

wobei $R_1$ und $R_2$, jeweils Niedrigalkylreste darstellen, wird zwecks vollständiger Bekämpfung praktisch aller Unkräuter derart formuliert, dass es einen zusätzlichen Gehalt mindestens eines der Wirkstoffe der Formel

A 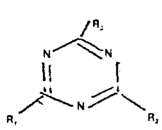

wobei $R_1$ und $R_2$ Alkylaminogruppen und $H_3$ ein Wasserstoff oder Halogen oder ein Alkylthiorest darstellen, oder der Formel

B 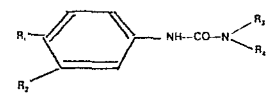

wobei $R_1$ und $R_2$ Wasserstoff, $C_{1-4}$-Alkyl, $C_{1-4}$-Alkoxy oder Halogen sowie $R_3$ und $R_4$ jeweils $C_{1-4}$-Alkyl oder $C$-$_{1-4}$Alkoxy darstellen, mit der Massgabe, dass $R_1$ und $R_2$ nicht beide Wasserstoff sind, oder der Formel

C 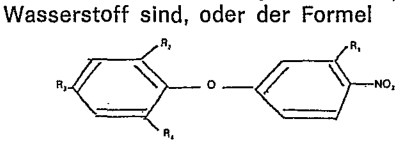

wobei $R_1$ H, $OCH_3$, O-CO-$CH_3$; $R_2$ Cl, $NO_2$; R₃ Cl, CF₃; $R_4$ H (F, Cl) darstellen aufweist.

Besonders geeignete Formulierungen sind solche, die als Dinitroanilinverbindung 4-(1,1-Dimethyläthyl)-N-(1-methylpropyl)-2,6-dinitrobenzamin (= Butralin) sowie zusätzlich

als Wirkstoff A 2-tert.-Butylamino-4-äthylamino-6-methylthio-1,3,5-triazin (= Terbutryn) oder

als Wirkstoff B 3-(3-Chlor-4-methylphenyl)-1,1-dimethyl-harnstoff (= Chlortoluron) oder

als Wirkstoff C Methyl-5-(2,4-dichlorphenoxy)-2-nitrobenzoat enthalten und dabei die Einzelwirkstoffe in einem Gewichtsverhältnis von 5 : 1 bis 1 : 5, insbesondere 2 : 1 bis 1 : 2, stehen.

EP 0 072 047 A1

NORDDEUTSCHE AFFINERIE AG
2000 Hamburg

9. Juli 1981
DROZ/HWS

0072047

Prov. Nr. 8659 NA

Mittel zur selektiven Unkrautbekämpfung und seine Anwendung

Die Erfindung betrifft ein Mittel zur selektiven Unkrautbekämpfung, enthaltend eine Dinitroanilinverbindung der Formel

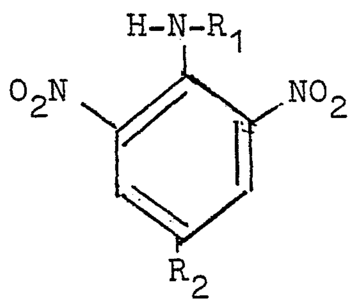

wobei $R_1$ und $R_2$ jeweils Niedrigalkylreste darstellen, sowie dessen Anwendung im Getreideanbau.

Dinitroanilinverbindungen der eingangs genannten Art sind z.B. aus der US - PS 3672 886 bekannt. So kann das 4-(1,1-dimethyläthyl) -N- (1 - methyl-propyl) -2,6- dinitrobenzamin (Butralin) z.B. zur selektiven Unkrautbekämpfung im Getreide als Vorauflaufherbizid eingesetzt werden. Nachteilig ist jedoch, daß nicht alle vorkommenden Unkräuter und Ungräser voll erfaßt werden.

Aufgabe der Erfindung ist, ein Mittel zur selektiven Unkrautbekämpfung zu schaffen, das den vorgenannten Nachteil nicht aufweist und sich für die wirksamere Bekämpfung von Unkräutern eignet.

Die Aufgabe wird gelöst,indem das eingangs genannte Mittel derart formuliert wird, daß es einen zusätzlichen Gehalt mindestens eines der Wirkstoffe der Formel

A 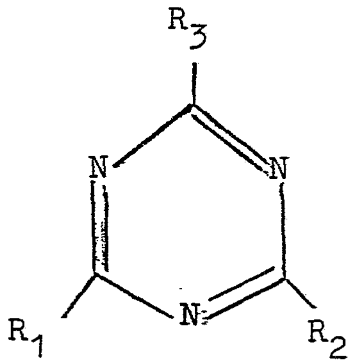

wobei $R_1$ und $R_2$ Alkylaminogruppen und $R_3$ ein Wasserstoff oder Halogen oder Alkylthiorest darstellen, oder der Formel

B 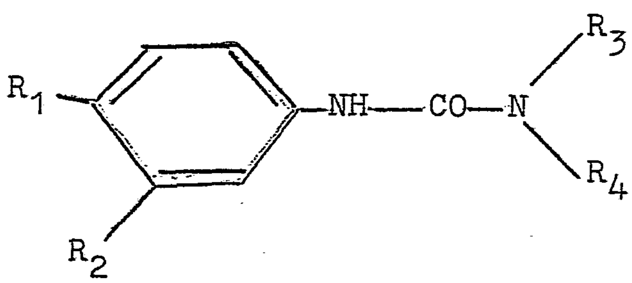

wobei $R_1$ und $R_2$ Wasserstoff, $C_{1-4}$-Alkyl, $C_{1-4}$-Alkoxy oder Halogen sowie $R_3$ und $R_4$ jeweil $C_{1-4}$-Alkyl oder $C_{1-4}$-Alkoxy darstellen, mit der Maßgabe, daß $R_1$ und $R_2$ nicht beide Wasserstoff sind, oder der Formel

C 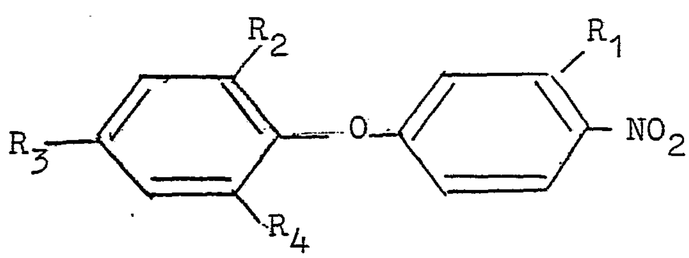

wobei $R_1$ H, $OCH_3$, $O-CO-CH_3$; $R_2$ Cl, $NO_2$; $R_3$ Cl, $CF_3$ $R_4$ H (F, Cl) darstellen, aufweist.

Überraschenderweise ist die herbizide Wirksamkeit der erfindungsgemäßen Mittel wesentlich höher als die Summe der Wirkungen ihrer Einzelwirkstoffe. Darüberhinaus ermöglichen sie nicht nur die Bekämpfung eines breiteren

Unkräuter-Spektrums, sondern weisen eine höhere selektive herbizide Wirksamkeit auf.

Die erfindungsgemäßen Mittel können entweder als Tankmischungen, bei denen die Wirkstoffkomponenten erst unmittelbar vor der Applikation miteinander vermischt werden, oder als Fertigformulierungen zur Anwendung gebracht werden. Sie können aber auch in die üblichen Formulierungen übergeführt werden, wie Spritzpulver, Emulsionen, Suspensionen, Granulate, wasserdispergierbare Granulate u.a., wobei sie dann außer der Wirkstoffkombination noch die üblichen Formulierungshilfsmittel, wie z.B. Inertstoffe, Netz-, Diespergier- und Emulgiermittel enthalten.

Bevorzugt sind Mittel, die als Dinitroanilinverbindung
4- (1,1- Dimethyläthyl) -N- (1-methylpropyl) -2,6- dinitrobenzamin (= Butralin) sowie zusätzlich
als Wirkstoff A 2-tert. -Butylamino -4- äthylamino-6-methylthio- 1,3,5- triazin (= Terbutryn) oder
als Wirkstoff B 3- ( 3-Chlor -4- methylphenyl) -1,1-dimethyl-harnstoff (= Chlortoluron), oder
als Wirkstoff C Methyl -5- (2,4-dichlorphenoxy) -2-nitrobenzoat enthalten.

Die Einzelwirkstoffe Dinitroanilinverbindung und A, B und/oder C lassen sich innerhalb weiter Grenzen miteinander kombinieren. Bevorzugt sind jedoch Mittel, in denen die Einzelwirkstoffe Dinitroanilinverbindungen zu A, B und/oder C in einem Gewichtsverhältnis von 5 : 1 bis 1 : 5, insbesondere 2 : 1 bis 1 : 2 stehen.

Die erfindungsgemäßen Mittel können sowohl vor als auch nach dem Auflaufen der Pflanzen appliziert werden. Die Anwendung wird vorzugsweise vor dem Auflaufen der Pflanzen vorgenommen. Sie können auch vor der Saat in den Boden eingearbeitet werden.

Die aufgewandte Wirkstoffmenge hängt im wesentlichen von der Art des gewünschten Unkrautbekämpfungsgrades ab. Im allgemeinen liegen die Aufwandmengen zwischen 1 und 10 kg Wirkstoff pro Hektar, vorzugsweise zwischen 2 und 6 kg/ha.

Mit Hilfe der erfindungsgemäßen Mittel lassen sich zahlreiche Unkräuter in Nutzpflanzenkulturen, insbesondere in Getreidearten, wie Weizen, Roggen und Gerste, erfolgreich bekämpfen.

Wenn ein Mittel zum Einsatz gelangt, das die Dinitroanilinverbindung zusammen mit dem Wirkstoff A enthält, ist eine besonders gute Bekämpfung der Unkrautarten Alopecurus myosuroides, Matricaria ssp., Lamium ssp., Stellaria media, Thlaspi arvense, Veronica ssp. und Viola tricolor zu beobachten.

Wird ein Mittel angewendet, das die Dinitroanilinverbindung zusammen mit dem Wirkstoff B enthält, ist eine besonders gute Bekämpfung der Unkrautarten Alopecurus myosuroides, Apera spica venti, Poa annua, Capsella bursapastoris, Galium aparine, Lamium ssp., Matricaria ssp, Myosotis arvensis, Stellaria media, Thlaspi arvense, Veronica ssp. und Viola tricolor festzustellen.

Bei Ausbringung eines Mittels, das die Dinitroanilinverbindung zusammen mit dem Wirkstoff C enthält, werden besonders gut die Unkrautarten Alopecurus myosuroides, Apera spica venti, Poa annua, Lamium ssp., Myosotis arvensis, Stellaria media, Thlaspi arvense, Veronica ssp. und Viola tricolor bekämpft.

Die gute herbizide Wirkung der erfindungsgemäßen Mittel wird anhand der nachfolgenden drei Beispiele näher und beispielsweise erläutert.

Während die einzelnen Wirkstoffe erhebliche Schwächen aufweisen, zeigen die erfingunggemäßen Mittel eine Bekämpfungswirkung, die über eine einfache Wirkungsummierung hinausgeht.

Aus den Tabellen geht eindeutig hervor, daß die gefundene herbizide Wirkung der erfindungsgemäßen Mittel bei den Unkräutern überadditiv ist, d.h. es liegt ein synergistischer Effekt vor.

Zur Berechnung eines synergistischen Effektes wurde davon ausgegangen, daß ein rein additiver Effekt sich nach folgender Formel errechnet:

$$E = X + Y - \frac{X \cdot Y}{100}$$

(vgl. Colby, S.R., "Calculating synergistic and antagonistic responses of herbicide combinations", Weeds <u>15</u> 1967).

E = der (bei additiver Wirkung) zu erwartende herbizide Wirkungsgrad ( % Unkrautvernichtung) nach Anwendung der Herbizide A + B bei p + q kg Aufwand/ha
X = Wirkungsgrad ( % ) bei Anwendung des Wirkstoffs A mit p kg/ha
Y = Wirkungsgrad ( % ) bei Anwendung des Wirkstoffs B mit q kg/ha.

Liegt der experimentell gefundene Wert über dem gemäß vorliegender Formel errechneten Wert, so liegt ein Synergismus vor.

Aus den Beispielen 1 bis 3 geht hervor, daß die gefundene herbizide Wirkung der erfindungsgemäßen Mittel bei den Unkräutern größer ist als die berechnete, d.h. es liegt ein echter synergistischer Effekt vor.

Beispiel 1:

Zu 46 Gewichtsteilen eines Lösungsmittelgemisches aus Dimethylformamid und Xylol im Verhältnis 3 : 1 wurden zunächst 5 Gewichtsteile eines Emulgators zugegeben und anschließend 33 Gewichtsteile 4-(1,1- Dimethyläthyl) -N-(1-methylpropyl)-2,6-dinitrobenzamin (= Butralin) sowie 16,5 Gewichtsteile 2-tert.-Butylamino-4-äthylamino-6-methylthio-1,3,5-triazin (= Terbutryn) durch ca. 30 minütiges Rühren gelöst.

Für den Vorauflauftest im Winterweizen wurden 6 l/ha dieses Konzentrats, verdünnt mit 400 l Wasser, eingesetzt.

Das Ergebnis der Versuche ist im Vergleich zur Anwendung der Einzelwirkstoffe und des nach der Formel errechneten Wertes in der nachfolgenden Tabelle zusammengestellt.

Tabelle (Beispiel 1)

% Abtötungsquote durch das Prüfmittel
für das jeweilige Unkraut

| Wirkstoff | Aufwand-menge | Wirkstoff g/ha | Unkraut ALOMY | | Unkraut MATCH | | Unkraut STEME | |
|---|---|---|---|---|---|---|---|---|
| | | | gef. | ber. | gef. | ber. | gef. | ber. |
| I Butralin | 4 l | 1920 | 70 | | 60 | | 90 | |
| II Terbutryn | 2 l | 960 | 20 | | 80 | | 70 | |
| III = I + II (erfindungsgemäß) | 6 l | 1920 + 960 | 98 | 76 | 100 | 92 | 100 | 97 |

gef.: gefundene Schädigung des Unkrautes
ber.: nach der Formel berechnete Schädigung des Unkrautes

Beispiel 2:

20 Gewichtsteile Butralin wurden in der halben Gewichtsmenge Aceton gelöst und in einem Mischer auf 5 Gewichtsteile feindisperse synthetische Kieselsäure (KS 320 DS)* gesprüht. Anschließend wurden dem Mischer 20 Gewichtsteile 3- (3-Chlor-4-methylphenyl) -1,1-dimethylharnstoff (= Chlortoluron), 21 Gewichtsteile Kieselgur, 10 Gewichtsteile Calcium-Alkylarylsulfonat, 20 Gewichtsteile Calciumcarbonat (Champagnekreide), 5 Gewichtsteile Dispergier- und 5 Gewichtsteile Emulgierhilfsmittel zugefügt und 15 Minuten nachgemischt. Man erhielt ein feinpulvriges Spritzpulver. Die Aufwandmenge betrug 10 kg/ha.

Für den Vorauflauftest in Wintergerste wurden 10 kg des Pulvers in 400 l Wasser fein verrührt und anschließend verspritzt.

Die analog zu Beispiel 1 vorgenommenen Versuche sind nachfolgend zusammengestellt.

Tabelle (Beispiel 2)

% Abtötungsquote durch das Prüfmittel für das jeweilige Unkraut

| Wirkstoff | Aufwand-menge | Wirkstoff g/ha | Unkraut ALOMY gef. | Unkraut ALOMY ber. | Unkraut GALAP gef. | Unkraut GALAP ber. |
|---|---|---|---|---|---|---|
| I Butralin | 5 l | 2400 | 95 | | 80 | |
| II Chloruoluron | 5 l | 2500 | 99 | | 0* | |
| III = I + II (erfindungsgemäß) | 10 l | 1920 + 2000 | 100 | 99,95 | 99 | 80 |

* Chlortoluron induziert die Keimung von GALAP, ohne sie zu schädigen! Problem der GALAP-Bekämpfung ist die unterschiedliche Auflaufzeit. Bei spätem Auflauf ist üblicherweise der Herbizidfilm auf dem Boden schon verdünnt. Minderwirkungen sind die Folge, auch bei Herbiziden, die gegen GALAP aktiv sind.

Bei Kombinationen von Chlortoluron mit GALAP-wirksamen Vorauflauf-Herbiziden (Butraline, Pendimethalin, Trifluralin, Terbutryn, Methabenzthiazuron) trifft der Wirkstoff des Partners auf die keiminduzierte GALAP und bringt sie zum Absterben.

Beispiel 3:

30 Gewichtsteile Butralin und 15 Gewichtsteile Methyl-5-(2,4-dichlorphenoxy)-2-nitrobenzoat wurden in einem Gemisch aus 38 Gewichtsteilen Solventnaphtha und 15 Gewichtsteilen Emulgator (Emulsogen I 40) unter Rühren gelöst.

Für den Vorauflauftest im Winterweizen wurden 6 l/ha dieses Emulsionskonzentrats, verdünnt mit 400 l Wasser, eingesetzt.

Die analog zu Beispiel 1 vorgenommenen Versuche sind nachfolgend zusammengestellt.

Tabelle (Beispiel 3)

| Wirkstoff | Aufwand-menge | Wirkstoff g/ha | % Abtötungsquote durch das Prüfmittel für das jeweilige Unkraut: Unkraut GALAP | | Unkraut VERHE | |
|---|---|---|---|---|---|---|
| | | | gef. | ber. | gef. | ber. |
| I Butralin | 4 l | 1920 | 60 | | 90 | |
| II Methyl -5- (2,4-dichlorphenoxy) -2- nitrobenzoat | 2 l | 960 | 80 | | 85 | |
| III = I + II (erfindungsgemäß) | 6 l | 1920 + 960 | 98 | 92 | 100 | 98,5 |

1. Mittel zur selektiven Unkrautbekämpfung, enthaltend eine Dinitroanilinverbindung der Formel

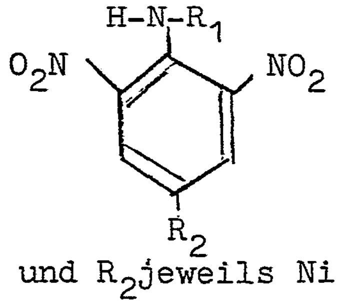

wobei $R_1$ und $R_2$ jeweils Niedrigalkylreste darstellen, dadurch gekennzeichnet, daß es einen zusätzlichen Gehalt mindestens eines der Wirkstoffe der Formel

A 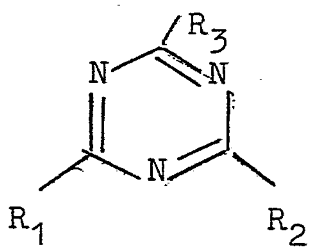

wobei $R_1$ und $R_2$ Alkylaminogruppen und $R_3$ ein Wasserstoff oder Halogen oder ein Alkylthiorest darstellen, oder der Formel

B 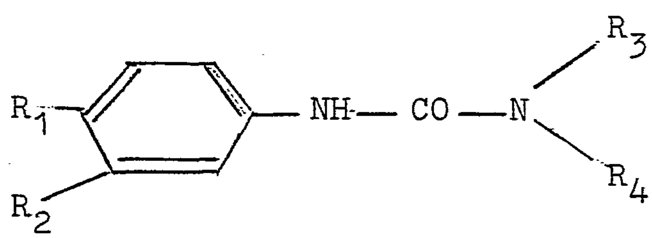

wobei $R_1$ und $R_2$ Wasserstoff, $C_{1-4}$ -Alkyl, $C_{1-4}$ -Alkoxy oder Halogen sowie $R_3$ und $R_4$ jeweils $C_{1-4}$ -Alkyl oder $C_{1-4}$ -Alkoxy darstellen, mit der Maßgabe, daß $R_1$ und $R_2$ nicht beide Wasserstoff sind, oder der Formel

C 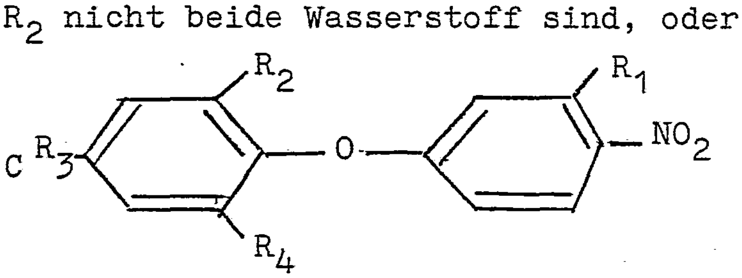

wobei $R_1$ H, $OCH_3$ , $O-CO-CH_3$ ; $R_2$ Cl, $NO_2$ ; $R_3$ Cl, $CF_3$ $R_4$ H ( F, Cl ) darstellen, aufweist.

2. Mittel nach Anspruch 1, dadurch gekennzeichnet, daß es als Dinitroanilinverbindung 4- (1,1- Dimethyläthyl) -N- (1-methylpropyl) -2,6- dinitrobenzamin (= Butralin) sowie zusätzlich

als Wirkstoff A 2-tert. -Butylamino -4- äthylamino-6-methylthio- 1,3,5- triazin (= Terbutryn) oder

als Wirkstoff B 3- (3-Chlor -4- methylphenyl) -1,1-dimethyl-harnstoff (= Chlortoluron), oder

als Wirkstoff C Methyl -5- (2,4-dichlorphenoxy) -2-nitrobenzoat enthält.

3. Mittel nach Anspruch 1 oder 2, dadurch gekennzeichnet, daß die Einzelwirkstoffe Dinitroanilinverbindung zu A, B und/oder C in einem Gewichtverhältnis von 5 : 1 bis 1 : 5, insbesondere 2 : 1 bis 1 : 2, stehen.

4. Anwendung des Mittel gemäß Anspruch 1, 2, oder 3 zur selektiven Unkrautbekämpfung im Getreideanbau.

Europäisches Patentamt

# EUROPÄISCHER RECHERCHENBERICHT

0072047 Nummer der Anmeldung

EP 82 20 0843

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-1 348 428 (BASF) * Anspruch 1; Seite 2, Zeilen 96-101 * | 1,3 | A 01 N 33/22<br>A 01 N 37/48<br>A 01 N 43/70<br>A 01 N 47/30 //<br>(A 01 N 33/22<br>A 01 N 33/18 )<br>(A 01 N 37/48<br>A 01 N 33/18 )<br>(A 01 N 43/70<br>A 01 N 33/18 )<br>(A 01 N 47/30<br>A 01 N 33/18 ) |
| X | FR-A-2 414 870 (SIPCAM) * Ansprüche; Seite 3, Zeilen 5-31; Seite 4, Zeilen 9-27 * | 1-4 | |
| X | FR-A-2 414 873 (SIPCAM) * Ansprüche; Seite 7, Zeile 9; Seite 8, Zeile 23; Seite 14, Zeilen 14-23 * | 1-4 | |
| X | FR-A-2 432 838 (SIPCAM) * Ansprüche; Seite 4, Zeilen 3,18; Seite 5, Zeile 10; Seite 6, Zeilen 21,22 * | 1-4 | RECHERCHIERTE SACHGEBIETE (Int. Cl. 3) |
| X | FR-A-2 432 839 (SIPCAM) * Ansprüche; Seite 4, Zeilen 3,8,9; Seite 5, Zeile 20; Seite 6, Zeilen 22-23 * | 1-4 | A 01 N |
| X | FR-A-2 437 786 (SIPCAM) * Ansprüche; Seite 7, Zeile 33; Seite 8, Zeilen 19-20; Seite 11, Zeilen 15-25 * | 1-4 | |

Der vorliegende Recherchenbericht wurde für alle Patentansprüche erstellt.

| Recherchenort | Abschlußdatum der Recherche | Prüfer |
|---|---|---|
| DEN HAAG | 11-11-1982 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument